# FASCICULE DE BREVET EUROPEEN

(11) **EP 4 538 117 B1**
(45) Date de publication et mention de la délivrance du brevet: **21.01.2026**
(21) Numéro de dépôt: 24200191.5
(22) Date de dépôt: 13.09.2024
(51) Int. Cl.: B60R 13/04, F16B 5/12

(54) **ENJOLIVEUR DE PARECHOCS ET ENSEMBLE DE PARECHOCS POUR VÉHICULE AUTOMOBILE**
STOSSFÄNGERKAPPE UND STOSSFÄNGERANORDNUNG FÜR EIN KRAFTFAHRZEUG
BUMPER TRIM AND BUMPER ASSEMBLY FOR A MOTOR VEHICLE

(30) Priorité: 13.10.2023 FR 2311006
(43) Date de publication de la demande: 16.04.2025
(73) Titulaire: Stellantis Auto SAS, 78300 Poissy (FR)
(72) Inventeur: BOUDAN, JULIEN, 91210 DRAVEIL (FR); PERON, RODOLPHE, 95220 HERBLAY (FR); ROYER, GUILLAUME, 91680 Bruyères-le-Châtel (FR)
(74) Mandataire: BCIP

(56) Documents cités:
- US-A1- 2015 375 797

## Description

Le contexte technique de la présente invention est celui des éléments de face avant d'un véhicule automobile, contribuant à créer des effets de styles caractéristiques d'une marque ou d'un véhicule automobile. Plus particulièrement, l'invention a trait aux éléments de fixation de tels enjoliveurs de parechocs sur un parechocs de véhicule automobile.

Dans l'état de la technique, on connaît l'utilisation d'enjoliveurs de parechocs situés sur une face avant du véhicule automobile. De tels enjoliveurs de parechocs prennent la forme de pièces de carrosserie ou de calandre, de plus petites dimensions que celles du parechocs lui-même, lesdits enjoliveurs étant fixés solidairement sur le parechocs lors de son assemblage.

De manière habituelle, de tels enjoliveurs de parechocs connus sont fixés solidairement au parechocs ou au support de parechocs par l'intermédiaire de clips de fixations. Ces clips de fixation présentent des dimensions telles qu'ils étaient jusqu'ici réservés à des enjoliveurs de parechocs standards, c'est-à-dire ceux de grandes dimensions, présentant par exemple des dimensions supérieures à 20 mm dans au moins deux directions. US2015/375797A1 divulgue un enjoliveur conformement au préambule de la revendication 1.

L'invention pose la problématique du montage d'enjoliveurs de parechocs de plus petites dimensions, car les besoins ont évolués de la part des fabricants de véhicules automobiles. Aussi, les dispositifs de fixation utilisés pour les enjoliveurs de parechocs standards ne sont pas compatibles avec les enjoliveurs de parechocs de moindre dimension, car ils présentent un profil et/ou un encombrement incompatible avec l'enjoliveur de parechocs ou avec les organes de réception aménagés sur le parechocs et avec lesquels l'enjoliveur de parechocs est destiné à collaborer.

La présente invention a pour objet de proposer un nouvel enjoliveur de parechocs afin de répondre au moins en grande partie aux problèmes précédents et de conduire en outre à d'autres avantages.

Un autre but de l'invention est de faciliter la fixation d'un tel enjoliveur de parechocs de plus petites dimensions.

Un autre but de l'invention est de proposer une fixation simplifiée mais indémontable d'un tel enjoliveur de parechocs.

Un autre but de l'invention est d'autoriser le montage d'un tel enjoliveur de parechocs dans un espace très réduit.

Un autre but de l'invention est de proposer une solution économique et fiable, notamment en termes de tenue de l'enjoliveur de parechocs sur ledit parechocs.

Selon un premier aspect de l'invention, on atteint au moins l'un des objectifs précités avec un enjoliveur de parechocs pour véhicule automobile selon la revendication 1.

Selon l'invention, les clips de fixation présentent une conformation générale inclinée par rapport à l'axe d'élongation propre de l'enjoliveur de parechocs.

Dans le contexte de la présente invention, un axe longitudinal, un axe latéral et un axe vertical sont définis relativement au véhicule automobile sur lequel l'enjoliveur de parechocs conforme au premier aspect de l'invention est destiné à être monté. Plus particulièrement, l'axe transversal s'entend comme une direction prise entre un côté latéral du véhicule automobile et un côté latéral opposé dudit véhicule automobile. En d'autres termes, l'axe transversal s'entend selon une direction qui s'étend depuis un côté passager du véhicule automobile vers un côté conducteur dudit véhicule automobile, ou réciproquement. Les adjectifs latéraux, intérieur et extérieur font référence à un tel axe transversal. En outre, l'axe longitudinal s'étend comme étant pris le long d'une direction qui s'étend d'avant en arrière ou d'arrière en avant du véhicule automobile. L'axe longitudinal est perpendiculaire à l'axe transversal. Les adjectifs frontaux, avant et arrière font référence à cet axe longitudinal. Enfin, l'axe vertical s'entend comme étant pris le long d'un axe qui s'étend depuis les roues du véhicule automobile et vers le toit dudit véhicule automobile, ou inversement, l'axe vertical étant simultanément perpendiculaire à l'axe transversal et à l'axe longitudinal. Les adjectifs dessus et dessous, ou inférieur et supérieur font référence à cet axe vertical.

Complémentairement, on définit aussi un axe d'élongation propre dans le référentiel de l'enjoliveur de parechocs, l'axe d'élongation propre étant défini par la direction principale d'élongation de l'enjoliveur de parechocs, défini notamment par la direction d'élongation entre ses deux extrémités terminales. Dans le contexte de l'intégration de l'enjoliveur de parechocs dans le véhicule automobile, l'axe d'élongation propre de l'enjoliveur de parechocs est confondu ou sensiblement confondu avec l'axe vertical.

Dans le contexte de la présente invention, l'enjoliveur de parechocs peut prendre n'importe quelle forme. Préférentiellement, l'enjoliveur de parechocs prend la forme d'une portée qui s'étend de manière rectiligne selon l'axe d'élongation propre, l'enjoliveur de parechocs étant délimité par deux extrémités terminales opposées l'une de l'autre. L'enjoliveur de parechocs présente une face avant qui est destinée à être visible depuis l'avant du véhicule automobile sur lequel ledit enjoliveur de parechocs est destiné à être monté. Complémentairement, l'enjoliveur de parechocs comporte une face arrière qui est située en regard du parechocs sur lequel il est destiné à être monté. La face arrière est située à l'opposée de la face avant. La face arrière de l'enjoliveur de parechocs comporte ainsi une interface technique d'assemblage sur le parechocs.

Dans le contexte de la présente invention, l'interface technique d'assemblage de l'enjoliveur de parechocs sur le parechocs comporte la pluralité de clips de fixation. Chaque clip de fixation est configuré pour collaborer avec une interface correspondante aménagée sur le parechocs. Plus particulièrement, chaque clip de fixation collabore par encliquetage ou par engagement en force avec l'interface correspondante située en regard. Notamment, dans le contexte de la présente invention, chaque clip de fixation est configuré pour s'engager avec l'interface correspondante par déformation locale et élastique de la matière de l'interface et/ou du clip de fixation lui-même.

Dans le contexte de la présente invention, les clips de fixation présentent une conformation générale inclinée par rapport à l'axe d'élongation propre. En d'autres termes, chaque clip de fixation présente une géométrie et une extension propre - définie par exemple par la plus grande dimension du clip de fixation lui-même - qui est désalignée par rapport à l'axe d'élongation propre de l'enjoliveur de parechocs. Cette configuration avantageuse permet de résoudre le problème technique de l'invention en ce qu'elle rend possible la fixation par encliquetage d'un tel enjoliveur de parechocs de n'importe quelle dimension. Cet assemblage est très facile à mettre en œuvre comme il sera décrit plus bas.

Dans le contexte de la présente invention, l'au moins une portée de guidage forme un organe d'indexation de l'enjoliveur de parechocs sur son interface de montage - c'est-à-dire vers l'ouverture correspondante. Dans le contexte de la présente invention, par « associé » on considère qu'un clip de fixation est proximal d'une portée de guidage adjacente, de sorte à assurer un bon centrage dudit clip de fixation avec l'ouverture correspondante.

L'enjoliveur de parechocs conforme au premier aspect de l'invention comprend avantageusement au moins un des perfectionnements ci-dessous, les caractéristiques techniques formant ces perfectionnements pouvant être prises seules ou en combinaison :
- l'enjoliveur de parechocs s'étend préférentiellement de manière rectiligne, ledit enjoliveur de parechocs étant délimité par deux bords latéraux qui s'étendent parallèlement l'un à l'autre le long de l'axe d'élongation propre. Les bords latéraux sont situés en regard l'un de l'autre et relient la face avant à la face arrière de l'enjoliveur de parechocs ;
- la conformation générale des clips de fixation est inclinée selon un angle d'inclinaison supérieur à 10° par rapport à l'axe d'élongation propre de l'enjoliveur de parechocs. Préférentiellement, l'angle d'inclinaison est compris entre 10°et 20°, préférentiellement égal à 15°. Dans le contexte de la présente invention, l'angle d'inclinaison est mesuré par rapport à une plus grande dimension du clip de fixation correspondant ;
- l'enjoliveur de parechocs présente une largeur - prise perpendiculairement à l'axe d'élongation propre et dans le plan formé par la face arrière - inférieure ou égale à 10 mm, préférentiellement inférieure ou égale à 8 mm. Ainsi, l'invention est particulièrement adaptée aux enjoliveur de parechocs de faible dimension, car l'orientation des clips de fixation - inclinée par rapport à l'axe d'élongation propre de l'enjoliveur de parechocs - n'augmente pas l'encombrement général dudit enjoliveur de parechocs et rend possible la fixation par encliquetage avec une interface de montage située en regard. Dans le contexte de la présente invention, l'interface de montage comporte l'ouverture dans laquelle le clip de fixation est destiné à être engagé ;
- conformément à l'invention chaque clip de fixation comporte (i) une jambe qui s'étend en saillie depuis la face arrière de l'enjoliveur de parechocs, et (ii) une portée prismatique qui s'étend au niveau d'une extrémité libre de la jambe, la portée prismatique formant une plateforme inclinée par rapport à l'axe d'élongation propre. La jambe s'étend préférentiellement de manière perpendiculaire à la face arrière de l'enjoliveur de parechocs. La portée prismatique s'étend au bout de la jambe. La portée prismatique forme ainsi une plateforme située à distance de la face arrière de l'enjoliveur de parechocs et permettant de s'interfacer - par encliquetage ou par engagement en force - avec l'interface de montage située en regard sur le parechocs. La conformation générale du clip de fixation est mesurée au niveau de la portée prismatique correspondante ;
- conformément à l'invention au niveau d'une face d'engagement de la portée prismatique des clips de fixation située à distance de la face arrière de l'enjoliveur de parechocs, la portée prismatique comporte un chanfrein périphérique. Cette configuration avantageuse permet de faciliter la collaboration du clip de fixation - et notamment de sa portée prismatique - avec l'interface de montage située en regard ;
- la portée prismatique de chaque clip de fixation est contenue entre deux bords latéraux de l'enjoliveur de parechocs. Cette configuration avantageuse permet de réduire et de limiter l'encombrement de l'enjoliveur de parechocs, rendant compatible l'utilisation des clips de fixation avec des enjoliveurs de parechocs de très petite dimension ;
- dans un plan transversal à l'axe d'élongation propre, l'enjoliveur de parechocs présente un profil en « T » ou en « L ». Cette configuration avantageuse permet de former un organe de retenue - la portée prismatique - avec l'interface de montage située en regard, empêchant ainsi l'enjoliveur de parechocs d'être détaché dudit parechocs ;
- l'au moins une portée de guidage associée à chaque clip de fixation s'étend depuis la face arrière de l'enjoliveur de parechocs, ladite portée de guidage comportant une face inclinée par rapport à la face arrière. Chaque portée de guidage prend la forme d'un mur plan dont une face distante de la face arrière est inclinée par rapport à ladite face arrière, de sorte à réaliser une indexation et une orientation progressive du clip de fixation vers l'ouverture correspondante ;
- dans un plan perpendiculaire à la face arrière de l'enjoliveur de parechocs, une forme générale de chaque au moins une portée de guidage est triangulaire ou trapézoïdale ;
- chaque au moins une portée de guidage est située de manière centrée entre les deux bords latéraux de l'enjoliveur de parechocs ;

Avantageusement, l'enjoliveur de parechocs comporte (i) des premiers clips de fixation associés à chaque extrémité longitudinale de l'enjoliveur de parechocs, chaque premier clip de fixation étant associé à une première portée de guidage située du côté de l'extrémité longitudinale correspondante de l'enjoliveur de parechocs, et (ii) un deuxième clip de fixation situé entre les premiers clips de fixation, le deuxième clip de fixation étant associé à deux deuxièmes portées de guidage situées de part et d'autre du deuxième clip de fixation. Cette configuration est particulièrement avantageuse pour des enjoliveurs de parechocs de petite dimension.

Selon un deuxième aspect de l'invention, il est proposé un ensemble de parechocs pour véhicule automobile, l'ensemble de parechocs comportant :
- au moins un enjoliveur de parechocs conforme au premier aspect de l'invention ou selon l'un quelconque de ses perfectionnements;
- au moins un site d'accueil associé à chaque au moins un enjoliveur de parechocs, l'au moins un site d'accueil comportant une pluralité de dépressions formant chacune une surface concave et une ouverture aménagée au fond de ladite surface concave, de sorte que chaque clip de fixation puisse être engagé en force dans l'ouverture correspondante.

Dans le contexte de la présente invention, chaque site d'accueil est formé sur un support de parechocs ou sur une peau de parechocs fixée solidairement au support de parechocs.

Dans le contexte de la présente invention, chaque dépression forme une surface concave qui s'étend en saillie dans une direction opposée à l'enjoliveur de parechocs associé. La dépression forme ainsi une structure pyramidale de faible épaisseur qui pourra être déformée élastiquement lorsque le clip de fixation de l'enjoliveur de parechocs sera introduit dans ladite dépression puis, finalement, dans l'ouverture. Cette configuration est particulièrement avantageuse car elle permet, lors du montage de l'enjoliveur de parechocs et l'introduction du clip de fixation dans la dépression et au travers de l'ouverture correspondante, une déformation élastique de la dépression et de l'ouverture associée, rendant possible l'engagement du clip de fixation - et sa portée prismatique - au travers de ladite ouverture. Cette déformation élastique est rendue possible car la surface concave est alors sollicitée en flexion et en étirement. En revanche, une fois monté, il n'est plus possible de retirer le clip de fixation - et notamment la portée prismatique - hors de l'ouverture car la surface concave est alors perçue comme une surface convexe par la portée prismatique engagée dans l'ouverture : il n'est pas possible désormais de déformer élastiquement la dépression, et le clip de fixation demeure retenu dans l'ouverture, sauf à détériorer le clip de fixation et/ou la dépression.

L'ensemble de parechocs conforme au deuxième aspect de l'invention comprend avantageusement au moins un des perfectionnements ci-dessous, les caractéristiques techniques formant ces perfectionnements pouvant être prises seules ou en combinaison :
- chaque dépression est configurée pour pouvoir être déformée de manière élastique lors de l'insertion du clip de fixation correspondant ;
- chaque dépression est configurée pour accueillir les portées de guidage associée aux clips de fixation, la face inclinée des portées de guidage collaborant avec la surface concave de la dépression pour guider le clip de fixation correspondant vers l'ouverture ;
- chaque dépression comporte au moins un ergot d'arrêt qui s'étend en saillie depuis la surface concave, ledit ergot collaborant avec l'enjoliveur de parechocs lorsque celui-ci est engagé le site d'accueil.

Selon un troisième aspect de l'invention, il est proposé un véhicule automobile comportant un ensemble de parechocs conforme au deuxième aspect de l'invention ou selon l'un quelconque de ses perfectionnements.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] illustre une vue tridimensionnelle d'un exemple de réalisation d'un enjoliveur de parechocs conforme au premier aspect de l'invention ;
[Fig.2] illustre une vue de détail en perspective d'un clip de fixation de l'enjoliveur de parechocs illustré sur la FIGURE 1 ;
[Fig.3] illustre une vue de détail et de profil d'un clip de fixation de l'enjoliveur de parechocs illustré sur la FIGURE 1 ;
[Fig.4] illustre une vue en perspective d'un ensemble de parechocs conforme au deuxième aspect de l'invention ;
[Fig.5] illustre une vue de détail et en perspective d'un site d'accueil de l'un des clips de fixation de l'enjoliveur de parechocs illustré sur la FIGURE 1 et monté sur l'ensemble de parechocs de la FIGURE 2 ;
[Fig.6] illustre une vue de détail et en coupe de l'un des clips de fixation de l'enjoliveur de parechocs illustré sur la FIGURE 1 et monté sur l'ensemble de parechocs de la FIGURE 2 ;
[Fig.7] illustre une vue de détail et en perspective d'un site d'accueil de l'ensemble de parechocs de la FIGURE 2.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

Dans les FIGURES décrites ci après, on définit un axe longitudinal X, un axe latéral et un axe vertical Z relativement au véhicule automobile sur lequel l'enjoliveur 1 de parechocs selon l'invention est destiné à être monté.

Plus particulièrement, l'axe transversal Y s'entend comme une direction prise entre un côté latéral du véhicule automobile et un côté latéral opposé dudit véhicule automobile. En d'autres termes, l'axe transversal Y s'entend selon une direction qui s'étend depuis un côté passager du véhicule automobile vers un côté conducteur dudit véhicule automobile, ou réciproquement. Les adjectifs latéraux, intérieur et extérieur font référence à un tel axe transversal Y.

En outre, l'axe longitudinal X s'étend comme étant pris le long d'une direction qui s'étend d'avant en arrière ou d'arrière en avant du véhicule automobile. L'axe longitudinal X est perpendiculaire à l'axe transversal Y. Les adjectifs frontaux, avant et arrière font référence à cet axe longitudinal X.

Enfin, l'axe vertical Z s'entend comme étant pris le long d'un axe qui s'étend depuis les roues du véhicule automobile et vers le toit dudit véhicule automobile, ou inversement, l'axe vertical Z étant simultanément perpendiculaire à l'axe transversal Y et à l'axe longitudinal X. Les adjectifs dessus et dessous, ou inférieur et supérieur font référence à cet axe vertical Z.

Complémentairement, on définit aussi un axe d'élongation propre O1 dans le référentiel de l'enjoliveur 1 de parechocs, l'axe d'élongation propre O1 étant défini par la direction principale d'élongation de l'enjoliveur 1 de parechocs, défini notamment par la direction d'élongation entre ses deux extrémités terminales 101. Dans le contexte de l'intégration de l'enjoliveur 1 de parechocs dans le véhicule automobile, l'axe d'élongation propre O1 de l'enjoliveur 1 de parechocs est confondu ou sensiblement confondu avec l'axe vertical Z.

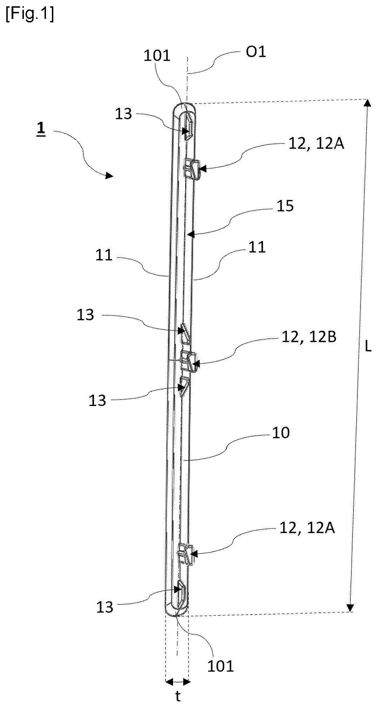

En référence aux FIGURE 1, 2 et 3, l'invention adresse un enjoliveur 1 de parechocs pour véhicule automobile. L'enjoliveur 1 de parechocs s'étend selon un axe d'élongation propre O1. Dans l'exemple de réalisation illustré sur les FIGURES 1 à 3, l'enjoliveur 1 de parechocs présente une forme rectiligne et allongée selon l'axe d'élongation propre O1. L'enjoliveur 1 de parechocs a une forme générale parallélépipédique, ledit enjoliveur 1 de parechocs étant délimité par deux bords latéraux 11 rectilignes et parallèles entre eux. Entre les deux bords latéraux 11, l'enjoliveur 1 de parechocs comporte une face avant 14 destinée à être mise en correspondance avec le parechocs du véhicule automobile, et une face arrière 10 qui forme une interface technique pour l'assemblage de l'enjoliveur 1 de parechocs sur ledit parechocs. La face avant 14 et la face arrière 10 sont planes. La face avant 14 et la face arrière 10 sont avantageusement parallèles.

Au niveau de la face arrière 10, l'enjoliveur 1 de parechocs comporte une pluralité de clips de fixation 12, 12A, 12B destinés à collaborer avec des ouvertures complémentaires aménagées sur un support de parechocs du véhicule automobile ou sur le parechocs lui-même, chaque clip de fixation 12, 12A, 12B étant associé à au moins une portée de guidage 13 du clip de fixation 12, 12A, 12B dans l'ouverture 33 complémentaire correspondante. Les clips de fixation 12, 12A, 12B et les portées de guidage 13 sont répartis le long de la face arrière 10 de l'enjoliveur 1 de parechocs, relativement à l'axe d'élongation propre O1.

En particulier, dans l'exemple de réalisation illustré sur les FIGURES 1 à 3, l'enjoliveur 1 de parechocs comporte :
- des premiers clips de fixation 12A associés à chaque extrémité longitudinale de l'enjoliveur 1 de parechocs, chaque premier clip de fixation 12A étant associé à une première portée de guidage 13 située du côté de l'extrémité longitudinale correspondante de l'enjoliveur 1 de parechocs. En d'autres termes, les premiers clips de fixation 12A sont situés à chaque extrémité terminale 101 de l'enjoliveur 1 de parechocs, et la portée de guidage 13 associée au premier clip de fixation 12A correspondant est située à l'opposée des autres clips de fixation 12, 12A, 12B, relativement audit premier clip de fixation 12A ; et
- un deuxième clip de fixation 12B situé entre les premiers clips de fixation 12A, le deuxième clip de fixation 12B étant associé à deux deuxièmes portées de guidage 13 situées de part et d'autre du deuxième clip de fixation 12B. En d'autres termes, le deuxième clip de fixation 12B est situé dans une position intermédiaire entre les deux deuxièmes clips de fixation 12B, et préférentiellement dans une position centrale de l'enjoliveur 1 de parechocs, relativement à l'axe d'élongation propre O1.

L'invention est particulièrement adaptée à des enjoliveurs 1 de parechocs de faible dimension, et notamment de faible largeur t, la largeur t étant considérée ici selon une direction perpendiculaire à l'axe d'élongation propre O1. En particulier, l'invention est particulièrement adaptée pour des largeurs inférieure à 10 mm, pour lesquelles l'utilisation des moyens de montage connus n'est plus possible du fait des dimensions réduites de l'enjoliveur 1 de parechocs.

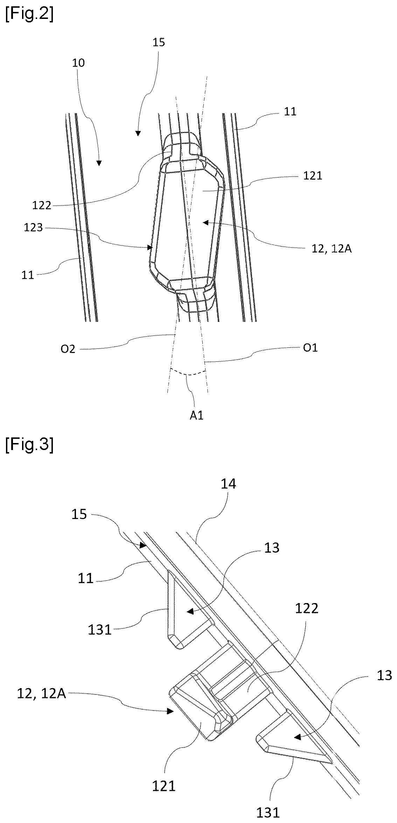

Ainsi, selon l'invention, et comme visible plus particulièrement sur les FIGURES 2 et 3, les clips de fixation 12, 12A, 12B présentent une conformation générale inclinée par rapport à l'axe d'élongation propre O1 de l'enjoliveur 1 de parechocs. L'inclinaison est ici mesurée dans un plan parallèle à la face arrière 10 et autour d'un axe perpendiculaire à la face arrière 10.

La conformation générale des clips de fixation 12, 12A, 12B est inclinée selon un angle d'inclinaison A1 supérieur à 10° par rapport à l'axe d'élongation propre O1 de l'enjoliveur 1 de parechocs. Préférentiellement, l'angle d'inclinaison A1 est compris entre 10°et 20°, préférentiellement égal à 15°.

Dans l'exemple de réalisation illustré sur les FIGURES 2 et 3, les clips de fixation 12, 12A, 12B comportent :
- une jambe 122 qui s'étend en saillie depuis la face arrière 10 de l'enjoliveur 1 de parechocs. La jambe 122 s'étend de manière perpendiculaire à la face arrière 10 de l'enjoliveur 1 de parechocs.
- une portée prismatique 121 qui s'étend au niveau d'une extrémité libre de la jambe 122, la portée prismatique 121 formant une plateforme qui s'étend selon un axe d'extension propre O2 incliné par rapport à l'axe d'élongation propre O1. La portée prismatique 121 s'étend au bout de la jambe 122. La portée prismatique 121 forme ainsi une plateforme située à distance de la face arrière 10 de l'enjoliveur 1 de parechocs et permettant de s'interfacer - par engagement en force - avec l'interface de montage située en regard sur le parechocs.

La jambe 122 et la portée prismatique 121 sont issues de matière, de sorte à former un ensemble monolithique. De plus, chaque clip de fixation 12, 12A, 12B est issu de matière avec le corps 15 de l'enjoliveur 1 de parechocs. Selon l'invention, c'est bien la portée prismatique 121 qui présente l'angle d'inclinaison A1 mentionné précédemment. La jambe 122 reliant la portée prismatique 121 au corps 15 de l'enjoliveur 1 de parechocs est, quand à elle, alignée avec l'axe d'élongation propre O1. Ce décalage entre la jambe 122 et la portée prismatique 121 permet à la fois de faciliter l'insertion de la portée prismatique 121 dans l'ouverture 33 aménagée sur le site d'accueil 3, mais aussi d'autoriser un verrouillage de la portée prismatique 121 - et finalement du clip de fixation 12, 12A, 12B - dans ladite ouverture 33.

L'inclinaison de la portée prismatique 121 vis-à-vis de l'axe d'élongation propre O1 et les dimensions de ladite portée prismatique 121 sont telles qu'une largeur t de la portée prismatique 121, prise perpendiculairement à l'axe d'élongation propre O1 et dans un plan parallèle à la face arrière 10, est inférieure à 5 mm, préférentiellement égale à 3 mm. D'une manière plus générale, la portée prismatique 121 de chaque clip de fixation 12, 12A, 12B est contenue entre deux bords latéraux 11 de l'enjoliveur 1 de parechocs. Cette configuration particulièrement étroite permet de définir un site d'accueil 3 minimal sur le parechocs ou le support de parechocs, et elle est particulièrement adaptée aux enjoliveurs 1 de parechocs de faibles dimensions.

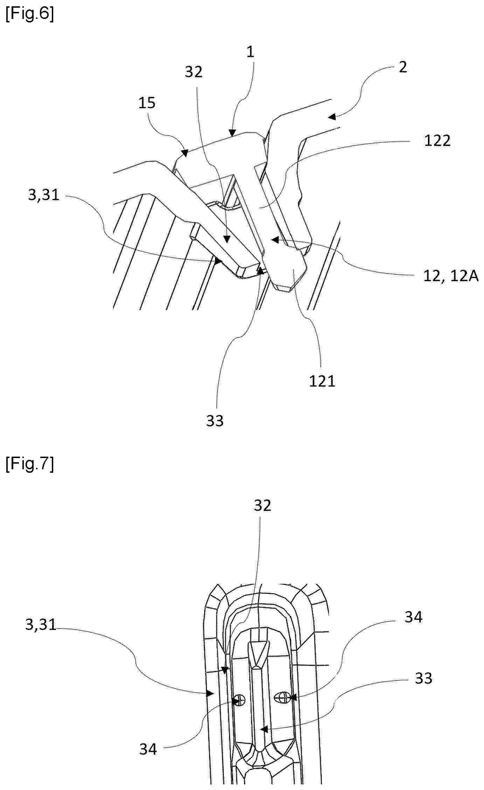

Comme visible sur les FIGURES 3 et 6, dans un plan transversal à l'axe d'élongation propre O1, l'enjoliveur 1 de parechocs présente un profil en « T » ou en « L ». En d'autres termes, la portée prismatique 121 est décentrée par rapport à la jambe 122 qui la relie au corps 15 de l'enjoliveur 1 de parechocs. Cette configuration avantageuse permet de former un organe de retenue - la portée prismatique 121 - avec l'interface de montage du site d'accueil 3 située en regard, empêchant ainsi l'enjoliveur 1 de parechocs d'être détaché dudit parechocs ;

Comme visible sur les FIGURES 1 et 3, l'enjoliveur 1 de parechocs comporte au moins une - et préférentiellement plusieurs - portée de guidage 13 associée à chaque clip de fixation 12, 12A, 12B. Chaque portée de guidage 13 s'étend en saillie depuis le corps 15 de l'enjoliveur 1 de parechocs. En particulier, chaque portée de guidage 13 s'étend depuis la face arrière 10 de l'enjoliveur 1 de parechocs.

Chaque portée de guidage 13 prend la forme d'un mur plan qui s'étend parallèlement à l'axe d'élongation propre O1 et perpendiculairement à la face arrière 10 de l'enjoliveur 1 de parechocs. La portée de guidage 13 comporte une face inclinée 131 distante de la face arrière 10, la face inclinée 131 est inclinée par rapport à la face arrière 10 du corps 15 de l'enjoliveur 1 de parechocs. L'inclinaison de la face inclinée 131 est comprise entre 30° et 60° par rapport à la face arrière 10, préférentiellement égale à 45°. Chaque face inclinée 131 forme ainsi une pente qui monte en direction du clip de fixation 12, 12A, 12B auquel elle est associée. D'une manière générale, dans un plan perpendiculaire à la face arrière 10 de l'enjoliveur 1 de parechocs, une forme générale de chaque au moins une portée de guidage 13 est triangulaire ou trapézoïdale.

Les portées de guidage 13 permettent de réaliser une indexation et une orientation progressive du clip de fixation 12, 12A, 12B vers l'ouverture 33 correspondante, lorsque le clip de fixation 12, 12A, 12B est engagé dans le site d'accueil 3 lors de la fixation de l'enjoliveur 1 de parechocs sur la peau de parechocs ou sur le parechocs.

Chaque portée de guidage 13 est située de manière centrée entre les deux bords latéraux 11 de l'enjoliveur 1 de parechocs. Chaque portée de guidage 13 s'étend parallèlement à l'axe d'élongation propre O1 de l'enjoliveur 1 de parechocs.

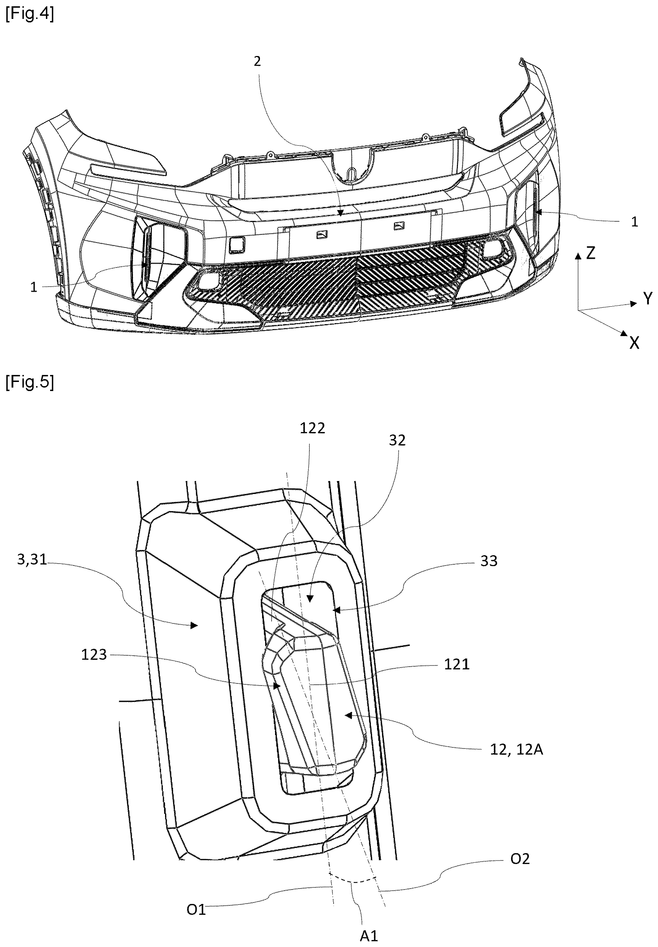

En référence à la FIGURE 4, l'invention adresse aussi un ensemble de parechocs 2 pour véhicule automobile, l'ensemble de parechocs 2 comportant :
- au moins un enjoliveur 1 de parechocs tel que décrit précédemment ;
- un support de parechocs ou sur une peau de parechocs fixée solidairement au support de parechocs ;
- au moins un site d'accueil 3 associé à chaque au moins un enjoliveur 1 de parechocs, l'au moins un site d'accueil 3 étant formé sur la peau de parechocs ou sur le support de parechocs et comportant une pluralité de dépressions formant chacune une surface concave 32 et une ouverture 33 aménagée au fond de ladite surface concave 32, de sorte que chaque clip de fixation 12, 12A, 12B puisse être engagé en force dans l'ouverture 33 correspondante.

Comme visible sur les FIGURES 5, 6 et 7, chaque dépression forme une surface concave 32 qui s'étend en saillie dans une direction opposée à l'enjoliveur 1 de parechocs associé. La dépression forme ainsi une structure pyramidale 31de faible épaisseur qui s'étend en arrière, relativement à l'axe longitudinal X. La dépression permet ainsi de mettre en tension la surface concave 32 destinée à accueillir le clip de fixation 12, 12A, 12B correspondant de l'enjoliveur 1 de parechocs. Les dimensions de la dépression sont telles qu'elles permettent au clip de fixation 12, 12A, 12B et à sa ou ses portées de guidage 13 associées de s'engager dans ladite dépression et au niveau de la surface concave 32.

En particulier, la conformation de la surface concave 32 et la conformation de la jambe 122 du clip de fixation 12, 12A, 12B associé sont telles que, lorsque le clip de fixation 12, 12A, 12B est engagé dans la dépression, une face de la jambe 122 située en regard de la dépression est mise en appui contre la surface concave 32. De manière analogue, lorsque le clip de fixation 12, 12A, 12B est engagé dans la dépression, la face inclinée 131 de la ou des portées de guidage 13 correspondantes sont mises en appui contre la surface concave 32. Cette configuration conduit à un guidage optimal du clip de fixation 12, 12A, 12B dans la dépression et vers l'ouverture 33 correspondante, ainsi qu'à une indexation optimale de l'enjoliveur 1 de dépression sur la peau de parechocs ou sur le support de parechocs correspondant.

Afin d'améliorer à la fois le guidage des portées de guidage 13 sur la surface concave 32 ainsi que le maintien de l'enjoliveur 1 de parechocs sur le site d'accueil 3 correspondant, chaque dépression comporte au moins un ergot 34 d'arrêt qui s'étend en saillie depuis la surface concave 32, ledit ergot 34 collaborant avec l'enjoliveur 1 de parechocs lorsque celui-ci est engagé le site d'accueil 3. Dans l'exemple de réalisation visible sur la FIGURE 7, la dépression comporte deux ergots 34 d'arrêt qui s'étendent chacun en saillie depuis la surface concave 32, chaque ergot 34 d'arrêt étant situé d'un côté et de l'autre de l'ouverture 33 associée.

L'ouverture 33 associée à la dépression est située au niveau d'une base de la surface concave 32. L'ouverture 33 a une forme allongée - typiquement oblongue ou rectangulaire - de sorte à pouvoir recevoir la portée prismatique 121 du clip de fixation 12, 12A, 12B, par un engagement en force au travers elle. L'ouverture 33 est orientée selon une direction parallèle ou sensiblement parallèle à l'axe d'élongation propre O1 de l'enjoliveur 1 lorsque ce dernier est approché et mis en place sur le site d'accueil 3 correspondant. En revanche, comme visible sur la FIGURE 5, la portée prismatique 121 du clip de fixation 12, 12A, 12B est inclinée par rapport à l'ouverture 33, permettant ainsi de retenir le clip de fixation 12, 12A, 12B - et l'enjoliveur 1 de parechocs - et de rendre son démontage impossible, sauf à détériorer l'enjoliveur 1 de parechocs et/ou le site d'accueil 3.

L'ouverture 33 de la dépression est ainsi configurée pour pouvoir être déformée élastiquement lorsque le clip de fixation 12, 12A, 12B de l'enjoliveur 1 de parechocs est introduit dans ladite dépression puis, finalement, dans l'ouverture 33.

Cette configuration est particulièrement avantageuse car elle permet, lors du montage de l'enjoliveur 1 de parechocs et l'introduction du clip de fixation 12, 12A, 12B dans la dépression et au travers de l'ouverture 33 correspondante, une déformation élastique de la dépression et de l'ouverture 33 associée, rendant possible l'engagement du clip de fixation 12, 12A, 12B - et sa portée prismatique 121 - au travers de ladite ouverture 33. Cette déformation élastique est rendue possible car la surface concave 32 est alors sollicitée en flexion et en étirement.

En revanche, une fois monté, il n'est plus possible de retirer le clip de fixation 12, 12A, 12B - et notamment la portée prismatique 121 - hors de l'ouverture 33 car la surface concave 32 est alors perçue comme une surface convexe par la portée prismatique 121 engagée dans l'ouverture 33: il n'est pas possible désormais de déformer élastiquement la dépression, et le clip de fixation 12, 12A, 12B demeure retenu dans l'ouverture 33, sauf à détériorer le clip de fixation 12, 12A, 12B et/ou la dépression.

En synthèse, l'invention concerne un enjoliveur 1 de parechocs pour véhicule automobile, l'enjoliveur 1 de parechocs s'étendant selon un axe d'élongation propre O1 et comportant, au niveau d'une face arrière 10, une pluralité de clips de fixation 12, 12A, 12B destinés à collaborer avec des ouvertures complémentaires aménagées sur un site d'accueil 3 d'une peau de parechocs du véhicule automobile. Chaque clip de fixation 12, 12A, 12B présente une orientation inclinée par rapport à l'axe d'élongation propre O1, et chaque clip de fixation 12, 12A, 12B est contenu dans la largeur t d'un corps 15 de l'enjoliveur 1 de parechocs. Chaque clip de fixation 12, 12A, 12B est configuré pour collaborer avec une ouverture 33 ménagée au niveau d'une extrémité d'une surface concave 32 formant le site d'accueil 3, le clip de fixation 12, 12A, 12B étant engagé en force dans l'ouverture 33 sans que celui-ci ne puisse être rétracté ensuite.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Enjoliveur (1) de parechocs pour véhicule automobile, l'enjoliveur (1) de parechocs s'étendant selon un axe d'élongation propre (O1) et comportant, au niveau d'une face arrière (10), une pluralité de clips de fixation (12, 12A, 12B) destinés à collaborer avec des ouvertures complémentaires aménagées sur un support de parechocs du véhicule automobile, chaque clip de fixation (12, 12A, 12B) étant associé à au moins une portée de guidage (13) du clip dans l'ouverture (33) complémentaire correspondante, les clips de fixation (12, 12A, 12B) étant répartis le long de la face arrière (10) de l'enjoliveur (1) de parechocs, les clips de fixation (12, 12A, 12B) présentant une conformation générale inclinée par rapport à l'axe d'élongation propre où chaque clip de fixation (12, 12A, 12B) comporte :
- une jambe (122) qui s'étend en saillie depuis la face arrière (10) de l'enjoliveur (1) de parechocs ;
- une portée prismatique (121) qui s'étend au niveau d'une extrémité libre de la jambe (122), la portée prismatique (121) formant une plateforme inclinée par rapport à l'axe d'élongation propre (O1),
**caractérisé en ce que**, au niveau d'une face d'engagement de la portée prismatique (121) des clips de fixation (12, 12A, 12B) située à distance de la face arrière (10) de l'enjoliveur (1) de parechocs, la portée prismatique (121) comporte un chanfrein (123) périphérique.

2. Enjoliveur (1) de parechocs selon la revendication précédente, dans lequel la conformation générale des clips de fixation (12, 12A, 12B) est inclinée selon un angle d'inclinaison (A1) compris entre 10°et 20°, préférentiellement égal à 15°.

3. Enjoliveur (1) de parechocs selon l'une quelconque des revendications précédentes, dans lequel l'enjoliveur (1) de parechocs présente une largeur (t) - prise perpendiculairement à l'axe d'élongation propre (O1) et dans le plan formé par la face arrière (10) - inférieure ou égale à 10 mm.

4. Enjoliveur (1) de parechocs selon l'une quelconque des revendications précédentes, dans lequel l'au moins une portée de guidage (13) associée à chaque clip de fixation (12, 12A, 12B) s'étend depuis la face arrière (10) de l'enjoliveur (1) de parechocs, ladite portée de guidage (13) comportant une face inclinée (131) par rapport à la face arrière (10).

5. Enjoliveur (1) de parechocs selon l'une quelconque des revendications précédentes, dans lequel l'enjoliveur (1) de parechocs comporte avantageusement :
- des premiers clips de fixation (12A) (12, 12A, 12B) associés à chaque extrémité longitudinale de l'enjoliveur (1) de parechocs, chaque premier clip de fixation (12A) (12, 12A, 12B) étant associé à une première portée de guidage (13) située du côté de l'extrémité longitudinale correspondante de l'enjoliveur (1) de parechocs ;
- un deuxième clip de fixation (12B) (12, 12A, 12B) situé entre les premiers clips de fixation (12A) (12, 12A, 12B), le deuxième clip de fixation (12B) (12, 12A, 12B) étant associé à deux deuxièmes portées de guidage (13) situées de part et d'autre du deuxième clip de fixation (12B) (12, 12A, 12B).

6. Ensemble de parechocs (2) pour véhicule automobile, l'ensemble de parechocs (2) comportant :
- au moins un enjoliveur (1) de parechocs selon l'une quelconque des revendications précédentes ;
- au moins un site d'accueil (3) associé à chaque au moins un enjoliveur (1) de parechocs, l'au moins un site d'accueil (3) comportant une pluralité de dépressions formant chacune une surface concave (32) et une ouverture (33) aménagée au fond de ladite surface concave (32), de sorte que chaque clip de fixation (12, 12A, 12B) puisse être engagé en force dans l'ouverture (33) correspondante.

7. Ensemble de parechocs (2) selon la revendication précédente, dans lequel chaque dépression comporte au moins un ergot (34) d'arrêt qui s'étend en saillie depuis la surface concave (32), ledit ergot (34) collaborant avec l'enjoliveur (1) de parechocs lorsque celui-ci est engagé le site d'accueil (3).

8. Véhicule automobile comportant un ensemble de parechocs (2) selon l'une quelconque des revendications 6 ou 7.

## Patentansprüche

1. Kraftfahrzeug-Stoßabdeckung (1), wobei sich die Stoßabdeckung (1) entlang einer eigenen Verlängerungsachse (01) erstreckt und mit einer Vielzahl von Clips an einer Rückseite (10) Halterung (12, 12A, 12B) zum Zusammenwirken mit komplementären Öffnungen an einem Stoßfänger des Kraftfahrzeuges, wobei jeder Halteklammer (12, 12A, 12B) mindestens eine Führungsfläche (13) der Klammer in der komplementären Öffnung (33) zugeordnet ist
Entsprechend sind die Befestigungsclips (12, 12A, 12B) entlang der Die Befestigungsclips (12, 12A, 12B) haben eine allgemeine Ausgestaltung, bei der jeder Befestigungsclip (12, 12A, 12B) aufweist:
- ein Bein (122), der von der Rückseite (10) von
die Zierkappe (1) von Parechocs;
- eine prismatische Reichweite (121), die sich an einem freien Ende erstreckt des Beines (122), wobei die prismatische Auflagefläche (121) eine Plattform bildet geneigt zur sauberen Verlängerungsachse (O1),
**dadurch gekennzeichnet, dass** auf der Höhe einer Eingriffsfläche der Spannweite Prisma (121) der Befestigungsclips (12, 12A, 12B), die sich im Abstand von Die Prismenfläche (121) der Zierkappe (1) weist eine umlaufende Fase (123) auf.

2. Stoßabdeckung (1) nach dem vorhergehenden Anspruch, wobei die allgemeine Gestaltung der Befestigungsclips (12,
12A, 12B) um einen Neigungswinkel (A1) von 10° geneigt ist und 20°, vorzugsweise 15°.

3. Stoßabdeckung (1) nach einem der vorhergehenden Ansprüche, wobei die Stoßabdeckung (1) eine Breite (t) - senkrecht zur Verlängerungsachse aufgenommen - aufweist sauber (O1) und in der durch die Rückseite (10) gebildeten Ebene - kleiner oder Gleich 10 mm.

4. Stoßabdeckung (1) nach einem der vorhergehenden Ansprüche, bei der sich die mindestens eine Führungsfläche (13), die jeder Befestigungsklammer (12, 12A, 12B) zugeordnet ist, von der Fläche erstreckt Die Führungsfläche (13) der Zierkappe (1) weist eine gegenüber der Rückseite (10) geneigte Fläche (131) auf.

5. Stoßabdeckung (1) nach einem der vorhergehenden Ansprüche, wobei die Stoßabdeckung (1) enthält vorteilhaft
- ersten Befestigungsclips (12A) (12, 12A, 12B), die jedem Längsende der Zierkappe (1) zugeordnet sind, wobei jeder ersten Befestigungsclip (12A) (12, 12A, 12B) einer ersten Führungsfläche (13) zugeordnet ist, die sich auf der Seite des jeweiligen Längsendes von die Zierkappe (1) von Parechocs;
- eine zweite Befestigungsklemme (12B) (12, 12A, 12B) zwischen den ersten Befestigungsklemmen (12A) (12, 12A, 12B), wobei die zweite Befestigungsklemme (12B) (12, 12A, 12B) zwei zweiten Führungsflächen (13) beiderseits der zweiten Befestigungsklemme (12B) (12, 12A, 12B) zugeordnet ist.

6. Stoßfängeranordnung (2) für ein Kraftfahrzeug,
Die Parechocs-Baugruppe (2) besteht aus:
- mindestens eine Zierkappe (1) für Stoßdämpfer nach einem der folgenden Ansprüche Vorhergehende Ansprüche;
- mindestens eine Aufnahmeeinrichtung (3), die jeder mindestens einen Radkappe (1) zugeordnet ist von Parechocs, wobei die mindestens eine Aufnahmeeinrichtung (3) aus einer Vielzahl von
Vertiefungen, die jeweils eine konkave Fläche (32) und eine am Boden der konkaven Fläche (32) ausgebildete Öffnung (33) bilden, sodass jede Befestigungsklammer (12, 12A, 12B) in die jeweilige Öffnung (33) kraftschlüssig eingreifbar ist.

7. Wie in Patentanspruch beanspruchter Satz von Parechocs (2) Vorherige, bei der jede Vertiefung wenigstens einen von der konkaven Fläche (32) vorstehenden Rastnocken (34) aufweist, der mit der Zierkappe (1) von Parechocs zusammenwirkt, wenn diese in die Aufnahmestelle (3) eingefahren ist.

8. Kraftfahrzeug mit einem Satz von Parechocs (2) nach einem der Ansprüche 6 oder 7.

## Claims

1. Motor vehicle bumper trim (1), the bumper trim (1) extending along a specific elongation axis (O1) and comprising, on the level of a rear face (10), a plurality of fastener (12, 12A, 12B) intended to collaborate with complementary openings provided on a bumper support of the motor vehicle, each fastener clip (12, 12A, 12B) being associated with at least one guide bearing surface (13) of the clip in the complementary opening (33) corresponding, the fixing clips (12, 12 A, 12 B) being distributed along the rear face (10) of the bumper trim (1), the fixing clips (12, 12A, 12B) having a general configuration where each fixing clip (12, 12A, 12B) comprises:
- a leg (122) projecting from the rear face (10) of the trim (1) of bumpers;
- a prismatic span (121) extending to the level of a free end
of the leg (122), the prismatic bearing surface (121) forming a platform inclined by report to the axis of elongation proper (O1),
wherein, in level of an engagement face of the bearing surface,
prismatic (121) fastening clips (12, 12A, 12B) located at a distance from the on the rear face (10) of the bumper trim (1), the prismatic bearing surface (121) comprises a peripheral chamfer (123).

2. A bumper cover (1) according to the previous claim, in which the general shape of the fixing clips (12, 12A, 12B) is inclined at an angle of inclination (A1) of between 10° and 20°, preferably 15°.

3. A bumper trim (1) according to any one of the previous claims, in which the bumper trim (1) has a width (t) - taken perpendicular to the axis of elongation clean (O1) and in the drawing formed by the rear face (10) - less than or equal to 10 mm.

4. A bumper cover (1) according to any one of the previous claims, in which the at least one guide bearing surface (13) associated with each fixing clip (12, 12A, 12B) extends from the face rear (10) of the trim (1) of bumpers, said guide surface (13) comprising an inclined face (131) by report with the rear face (10).

5. A bumper trim (1) according to any one of the previous claims, in which the bumper trim (1) advantageously comprises:
first fastening clips (12A) (12, 12A, 12B) associated with each longitudinal end of the bumper trim (1), each first fastening clip (12A) (12, 12A, 12B) being associated with a first guide bearing surface (13) located on the side of the corresponding longitudinal end of the trim (1) of bumpers ; second fixing clip (12B) (12, 12A, 12B) located between the first fixing clips (12A) (12, 12A, 12B), the second fixing clip (12B) (12, 12A, 12B) being associated with two second guide surfaces (13) located on either side of the second fixing clip (12B) (12, 12A, 12B).

6. Assembly of bumpers (2) for a motor vehicle,
bumper assembly (2) comprising:
- at least one bumper trim (1) according to any one of the previous claims;
- at least one receiving plant (3) associated with each at least one trim (1) of bumpers, the at least one receiving plant (3) comprising a plurality of depressions each forming a concave surface (32) and an opening (33) arranged at the bottom of said concave surface (32), so that each fixing clip (12, 12A, 12B) can be forcibly engaged in the corresponding opening (33).

7. Assembly of bumpers (2) according to claim 1 previous, in which each depression comprises at least one shutdown lug (34) which projects from the concave surface (32), said lug (34) collaborating with the bumper trim (1) when the latter is engaged with the receiving plant (3).

8. Motor vehicle comprising an assembly of bumpers (2) according to either of claims 6 and 7.
